(19) **Europäisches Patentamt / European Patent Office / Office européen des brevets**

(11) **EP 1 813 461 A2**

(12) **EUROPÄISCHE PATENTANMELDUNG**

(43) Veröffentlichungstag:
   **01.08.2007 Patentblatt 2007/31**

(51) Int Cl.:
   ***B60L 9/00*** *(2006.01)*      ***H02M 1/12*** *(2006.01)*

(21) Anmeldenummer: **06126638.3**

(22) Anmeldetag: **20.12.2006**

(84) Benannte Vertragsstaaten:
   **AT BE BG CH CY CZ DE DK EE ES FI FR GB GR HU IE IS IT LI LT LU LV MC NL PL PT RO SE SI SK TR**
   Benannte Erstreckungsstaaten:
   **AL BA HR MK YU**

(30) Priorität: **31.01.2006 DE 102006004338**

(71) Anmelder: **SIEMENS AKTIENGESELLSCHAFT**
   **80333 München (DE)**

(72) Erfinder:
   • **Gensler, Christoph**
    **91054 Buckenhof (DE)**
   • **Kistner, Michael**
    **96163 Gundelsheim (DE)**

(54) **Verfahren zum Ansteuern elektrischer Einrichtungen in einem Zug oder Zugverband**

(57) Die Erfindung betrifft ein Verfahren zum Ansteuern elektrischer Einrichtungen in einem Zug oder Zugverband durch Schaltimpulse. Es ist vorgesehen, dass jede elektrische Einrichtung im Zug oder Zugverband an einem nur für sie vorgegebenen Zeitpunkt angesteuert wird.

EP 1 813 461 A2

## Beschreibung

Die Erfindung betrifft ein Verfahren zum Ansteuern elektrischer Einrichtungen in einem Zug oder Zugverband durch Schaltimpulse.

Bei einem Zugverband, der aus mindestens zwei Zügen, zum Beispiel Triebzügen, oder aus mindestens zwei Lokomotiven und Wagen besteht, die aneinander gekoppelt sind, weist jeder Zug oder jede Lokomotive mindestens eine elektrische Einrichtung auf. Die elektrischen Einrichtungen werden dabei in gleicher Weise wie bei einem Zug gesteuert.

Die angesteuerten elektrischen Einrichtungen eines Zuges oder Zugverbandes sind beispielsweise getaktete Umrichter, deren Schaltimpulse von einem Rechner gesteuert werden. Die Schaltimpulse wirken sich auf das Versorgungsnetz aus. Bei einem Zugverband, der aus mehreren Zügen besteht, kann es vorkommen, dass Schaltimpulse gleichzeitig ausgesandt werden. Auch wenn eindeutig klar sein sollte, welche Einrichtung durch welchen Schaltimpuls angesteuert werden soll, kann es dazu kommen, dass sich durch gleichzeitiges Ansteuern mehrerer Einrichtungen die Rückwirkungen auf das Versorgungsnetz summieren. Die störenden Rückwirkungen werden dann so groß, dass Betriebsstörungen möglich werden.

Der Erfindung liegt die Aufgabe zugrunde, ein Verfahren zum Ansteuern elektrischer Einrichtungen in einem Zug oder Zugverband anzugeben, das die Rückwirkungen der zum Ansteuern notwendigen Schaltimpulse auf das Versorgungsnetz möglichst gering hält.

Die Aufgabe wird gemäß der Erfindung dadurch gelöst, dass jede elektrische Einrichtung im Zug oder Zugverband an einem nur für sie vorgegebenen Zeitpunkt angesteuert wird.

Damit wird der Vorteil erzielt, dass sich Schaltimpulse nicht überlagern können. Auch die Rückwirkungen auf das Versorgungsnetz, die auf Schaltimpulse zurückzuführen sind, können sich dann nicht überlagern. Es kommt folglich nicht zu erhöhten Rückwirkungen, die Betriebsstörungen zur Folge haben könnten.

Beispielsweise wird im Zug oder Zugverband jeder anzusteuernden elektrischen Einrichtung eine eigene Nummer zugeteilt und die Zeitpunkte für das Ansteuern der elektrischen Einrichtungen werden durch die Nummern bestimmt. Durch die Vergabe von Nummern wird der Vorteil erzielt, dass die Reihenfolge des Ansteuerns besonders gut zu regeln ist. Es kommt zu keinen Summierungen von Schaltimpulsen oder von Rückwirkungen der Schaltimpulse.

Beispielsweise wird die Funktionsfähigkeit der elektrischen Einrichtungen überprüft und es werden nur funktionsfähigen elektrischen Einrichtungen Nummern zugeteilt. Dadurch wird das Verfahren weiter optimiert

Die Zeitpunkte zum Ansteuern der elektrischen Einrichtungen werden beispielsweise durch Phasenwinkel der Netzspannung bestimmt. Auf diese Weise ist vorteilhaft eine besonders einfache Ansteuerung gegeben.

Beispielsweise werden die Phasenwinkel nach der folgenden Formel ausgesucht:

$$\varphi \;=\; \frac{N-1}{2 \cdot A} \cdot 180^\circ \,,$$

wobei N die Nummer der elektrischen Einrichtung und A die Anzahl der elektrischen Einrichtungen im Zug oder Zugverband ist. Hiermit wird der Vorteil erzielt, dass die vergebene Nummer der elektrischen Einrichtung in einen Phasenwinkel zur Ansteuerung dieser elektrischen Einrichtung umgewandelt werden kann.

Insbesondere ist A die Anzahl der funktionsfähigen elektrischen Einrichtungen.

Die elektrischen Einrichtungen sind beispielsweise getaktete Umrichter, die z. B. Eingangssteller oder Vierquadrantensteller sind. Diese elektrischen Einrichtungen sind in einem Schienenfahrzeug üblich.

Mit dem Verfahren nach der Erfindung wird der Vorteil erzielt, dass es nicht zu einer Aufsummierung von Rückwirkungen des Ansteuerns auf das Versorgungsnetz kommen kann, da die einzelnen elektrischen Einrichtungen zu unterschiedlichen Zeitpunkten bzw. mit unterschiedlichem Phasenwinkel angesteuert werden. Störende Rückwirkungen auf das Versorgungsnetz, wie z. B. Störströme, können sich nicht aufsummieren und werden daher minimiert. Durch das zeitversetzte Ansteuern der elektrischen Einrichtungen kann es sogar dazu kommen, dass sich vorteilhaft spektrale Störstromanteile verschiedener Ansteuervorgänge gegenseitig auslöschen. Die Störströme werden also sogar vermindert.

## Patentansprüche

1. Verfahren zum Ansteuern elektrischer Einrichtungen in einem Zug oder Zugverband durch Schaltimpulse, **dadurch gekennzeichnet, dass** jede elektrische Einrichtung im Zug oder Zugverband an einem nur für sie vorgegebenen Zeitpunkt angesteuert wird.

2. Verfahren nach Anspruch 1, **dadurch gekennzeichnet, dass** im Zug oder Zugverband jeder anzusteuernden elektrischen Einrichtung eine eigene Nummer zugeteilt wird und dass die Zeitpunkte für das Ansteuern der elektrischen Einrichtungen durch die Nummern bestimmt werden.

3. Verfahren nach Anspruch 2, **dadurch gekennzeichnet, dass** die Funktionsfähigkeit der elektrischen Einrichtungen überprüft wird und nur funktionsfähigen elektrischen Einrichtungen Nummern zugeteilt werden.

4. Verfahren nach einem der Ansprüche 1 bis 3, **da-**

**durch gekennzeichnet, dass** die Zeitpunkte zum Ansteuern der elektrischen Einrichtungen durch Phasenwinkel der Netzspannung bestimmt werden.

5. Verfahren nach Anspruch 4, **dadurch gekenn-zeichnet, dass** die Phasenwinkel

$$\varphi \;=\; \frac{N-1}{2 \cdot A} \cdot 180^\circ$$ sind, wobei N die Nummer der elektrischen Einrichtung und A die Anzahl der elektrischen Einrichtungen im Zug oder Zugverband ist.

6. Verfahren nach Anspruch 5, **dadurch gekennzeichnet, dass** A die Anzahl der funktionsfähigen elektrischen Einrichtungen ist.

7. Verfahren nach einem der Ansprüche 1 bis 6, **dadurch gekennzeichnet, dass** die elektrischen Einrichtungen getaktete Umrichter sind.